# EUROPÄISCHE PATENTSCHRIFT

(11) **EP 0 803 606 B1**
(45) Veröffentlichungstag und Bekanntmachung des Hinweises auf die Patenterteilung: **12.01.2005**
(21) Anmeldenummer: 97102072.2
(22) Anmeldetag: 10.02.1997
(51) Int. Cl.: D21G 1/02, F16C 13/00

(54) **Durchbiegungsausgleichswalze**
Controlled deflection roll
Rouleau à réglage de la flexion

(30) Priorität: 26.04.1996 DE 19616802
(43) Veröffentlichungstag der Anmeldung: 29.10.1997
(73) Patentinhaber: Voith Paper Patent GmbH, 89522 Heidenheim (DE)
(72) Erfinder: Schiel, Christian, 89520 Heidenheim (DE); Grabscheid, Joachim, 89547 Heuchlingen (DE)

(56) Entgegenhaltungen:
- DE-A- 2 550 366
- US-A- 4 741 079
- US-A- 5 189 775

## Beschreibung

Die Erfindung betrifft eine Durchbiegungsausgleichswalze mit einem umlaufenden Walzenmantel, einem den Walzenmantel axial durchsetzenden Joch und mehreren, in Axialrichtung einen jeweiligen Abstand voneinander aufweisenden hydrostatischen und/oder hydrodynamischen Stützelementen, durch die der Walzenmantel am Joch unter Ausbildung eines dazwischenliegenden Fluidpolsters abgestützt ist.

Bei einer derartigen Durchbiegungsausgleichswalze muß das beispielsweise über die Stützelemente zugeführte Fluid, insbesondere Öl, zumindest teilweise wieder aus dem Walzeninneren abgeführt werden. Bei einer Verwendung der Durchbiegungsausgleichswalze als Unterwalze kann Fluid durch die obenliegenden Stützelemente von der Innenfläche des Walzenmantels abgeschabt und schwerkraftunterstützt ausgetragen werden. Dies ist bei einer Verwendung der Durchbiegungsausgleichswalze als Oberwalze mit untenliegenden Stützelementen nicht möglich. Demzufolge ist bei einer aus der DE 25 50 366 A1 bekannten, als Oberwalze verwendeten Durchbiegungsausgleichswalze ein Schöpfring vorgesehen, der zwischen dem Joch und einem Endabschnitt des Walzenmantels angeordnet ist.

Weiter ist aus der US 4 741 079 A eine als Oberwalze verwendete Durchbiegungs ausgleichswalze bekannt, bei der mehrere über dessen axiale Länge verteilte Fluidabschöpfschuhe vorgesehen sind. Die Stützelemente dieser Walze sind jedoch nicht voneinander beabstandet.

Problematisch bei den bisher bekannten Durchbiegungsausgleichswalzen ist insbesondere, daß sich in der Walze relativ dicke Ölringe bilden können, die wiederum hohe Planschleistungsverluste mit sich bringen, die insbesondere bei der Umströmung der Stützelemente auftreten.

Ziel der Erfindung ist es, eine Durchbiegungsausgleichswalze der eingangs genannten Art zu schaffen, bei der auf einfache und zuverlässige Weise die im Walzeninnern enthaltene Fluidmenge und entsprechend die damit einhergehenden Planschleistungsverluste insbesondere auch bei einer Verwendung der Walze als Oberwalze auf ein Minimum herabgesetzt sind.

Die Aufgabe wird nach der Erfindung dadurch gelöst, daß am Innenumfang des Walzenmantels mehrere über dessen axiale Länge verteilte Fluidabstreifelemente vorgesehen sind, die bezüglich der Stützelemente auf Lücke angeordnet sind.

Hierbei wirken die Fluidabstreifelemente gezielt auf die diskreten Fluidringe, die dadurch entstehen, daß mitgenommenes Fluid schließlich die Stützelemente umströmt. Im Ergebnis läßt sich damit die im Walzeninneren enthaltene Fluidmenge auf ein Minimum reduzieren, so daß die an der Walzeninnenfläche gebildeten Fluidfilmschichten hinreichend dünn gehalten werden. Entsprechend sind auch die insbesondere bei einem Umströmen der Stützelemente auftretenden Planschleistungsverluste verringert. Gleichzeitig werden die Reibverluste gering gehalten. Diese sind insbesondere im Vergleich zu denen einer durchgehenden Abstreifklinge deutlich herabgesetzt.

Bei einer bevorzugten Ausführungsform der erfindungsgemäßen Durchbiegungsausgleichswalze ist die axiale Länge der gegenüber den Stützelementen um eine halbe Teilung der Stützelementenanordnung versetzten Fluidabstreifelemente zumindest gleich dem Abstand zwischen den Stützelementen und vorzugsweise größer als dieser Abstand, wobei dieser insbesondere etwa ein Drittel der Teilung der Stützelementenanordnung betragen kann. In diesem Fall lassen sich die Reibverluste gegenüber einer durchgehenden Abstreifklinge auf etwa ein Drittel verringern.

Insbesondere in dem Fall, daß Stützelemente verwendet werden, die einen Fluidfilm einer Dicke von etwa 50 bis 100µm erzeugen, kann zumindest ein Teil der Fluidabstreifelemente vorteilhafterweise derart angeordnet, ausgebildet und/oder beaufschlagbar sein, daß sie einen jeweiligen Fluidfilm von einer Dicke im Bereich von etwa 10 bis 100 µm durchlassen.

Von besonderem Vorteil ist auch, wenn die Fluidabstreifelemente zumindest teilweise derart angeordnet, ausgebildet und/oder beaufschlagbar sind, daß sie nur bei einer Verwendung der Durchbiegungsausgleichswalze als Oberwalze wirksam sind, bei der sie in der oberen Walzenhälfte liegen, während sie bei einer Verwendung der Durchbiegungsausgleichswalze als Unterwalze, bei der sie in der unteren Walzenhälfte liegen, unwirksam bleiben.

Bei einer Verwendung der Durchbiegungsausgleichswalze als Unterwalze können dann die Stützelemente selbst wieder als Abstreifer dienen.

Nachdem sich bei einer Verwendung der Durchbiegungsausgleichswalze als Oberwalze und als Unterwalze in ein- und derselben Maschine in der Regel unterschiedliche Drehrichtungen für den Walzenmantel ergeben, sind die betreffenden Fluidabstreifelemente zweckmäßigerweise derart angeordnet, ausgebildet und/oder beaufschlagbar, daß sie nur bei sich in einer Richtung drehenden Walzenmantel wirksam sind, während sie bei sich in der entgegengesetzten Richtung drehenden Walzenmantel unwirksam bleiben.

Auch die Stützelemente können so gestaltet sein, daß sie bei der sich für die Oberwalze ergebenden Drehrichtung des Walzenmantels vom Fluid gut umströmt werden, während sie bei sich in entgegengesetzter Richtung drehendem Walzenmantel das Fluid gut abstreifen.

Soll die Durchbiegungsausgleichswalze beispielsweise als Oberwalze für zwei Schwestermaschinen in spiegelverkehrter Anordnung verwendbar sein, so sind vorteilhafterweise zwei jeweils allgemein axial ausgebildete Reihen von Fluidabstreifelementen vorgesehen, wobei die Fluidabstreifelemente derart angeordnet, ausgebildet und/oder beaufschlagbar sind, daß die der einen Reihe zugeordneten Fluidabstreifelemente nur bei sich in einer Richtung drehendem Walzenmantel und die der anderen Reihe zugeordneten Fluidabstreifelemente nur bei sich in der entgegengesetzten Richtung drehendem Walzenmantel wirksam sind.

Grundsätzlich ist es jedoch auch denkbar, daß zumindest ein Teil der Fluidabstreifelemente bei beiden Drehrichtungen des Walzenmantels wirksam ist.

Bei einer in der Praxis bevorzugten Ausführungsform ist den Fluidabstreifelementen wenigstens eine Fluidaufnahme für einen schwerkraftunterstützten Fluidaustrag zugeordnet. Damit kann eine relativ aufwendige Fluidabsaugung entfallen.

In den Unteransprüchen sind weitere vorteilhafte Ausführungsvarianten der erfindungsgemäßen Durchbiegungsausgleichswalze angegeben.

Die Erfindung wird im folgenden anhand von Ausführungsbeispielen unter Bezugnahme auf die Zeichnung näher erläutert; in dieser zeigen:
- Figur 1: eine vereinfachte schematische Schnittdarstellung einer als Oberwalze verwendeten Durchbiegungsausgleichswalze,
- Figur 2: eine Draufsicht auf die abgewickelte Innenumfangsfläche des Walzenmantels der in Figur 1 gezeigten Durchbiegungsausgleichswalze,
- Figur 3: eine Ausführungsvariante eines Fluidabstreifelements, das schwerkraftunterstützt gegen die Innenfläche des Walzenmantels preßbar ist,
- Figur 4: eine weitere Ausführungsvariante eines Fluidabstreifelements, das durch Federkraft gegen die Innenfläche des Walzenmantels gehalten ist,
- Figur 5: eine weitere Ausführungsvariante eines Fluidabstreifelements mit zugeordneter Zylinder/Kolben-Einheit,
- Figur 6: eine weitere Ausführungsvariante eines Fluidabstreifelements mit schwerkraftunterstützcer Anpressung an die Innenfläche des Walzenmantels,
- Figur 7: eine Figur 1 vergleichbare schematische schnittdarstellung einer mit zwei Reihen von Fluidabstreifelementen versehenen Oberwalze, wobei in der angegebenen Drehrichtung des Walzenmantels nur die linken Fluidabstreifelemente wirksam sind, und
- Figur 8: die in Figur 7 gezeigte Oberwalze, wobei für den sich in der entgegengesetzten Richtung drehenden Walzenmantel nur die rechten Fluidabstreifelemente aktiv sind.

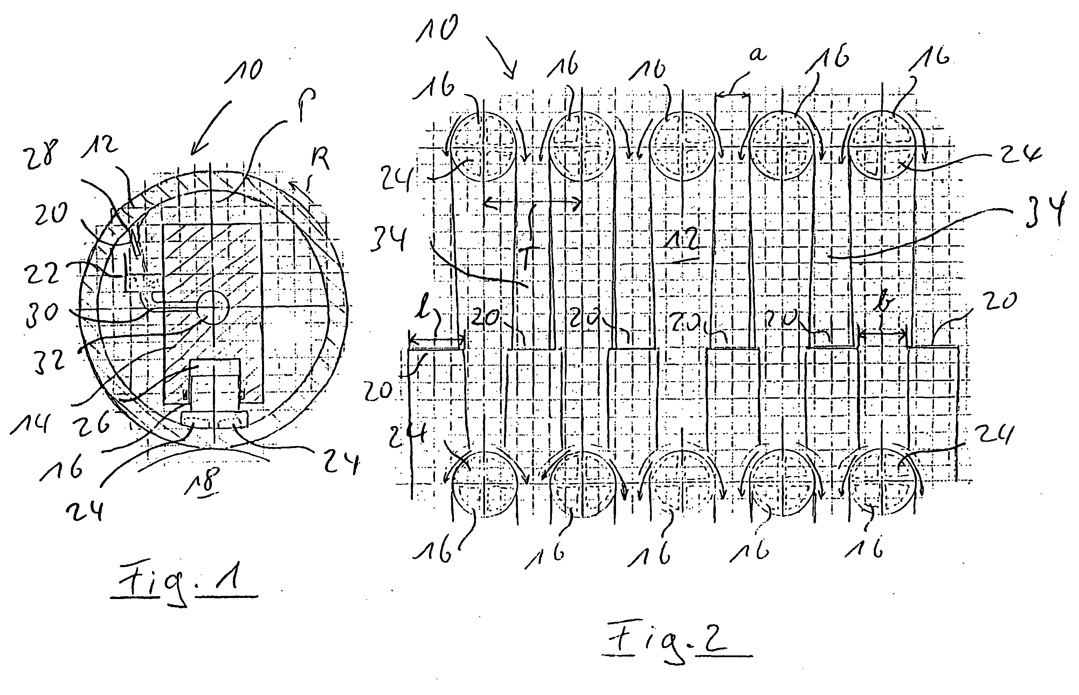

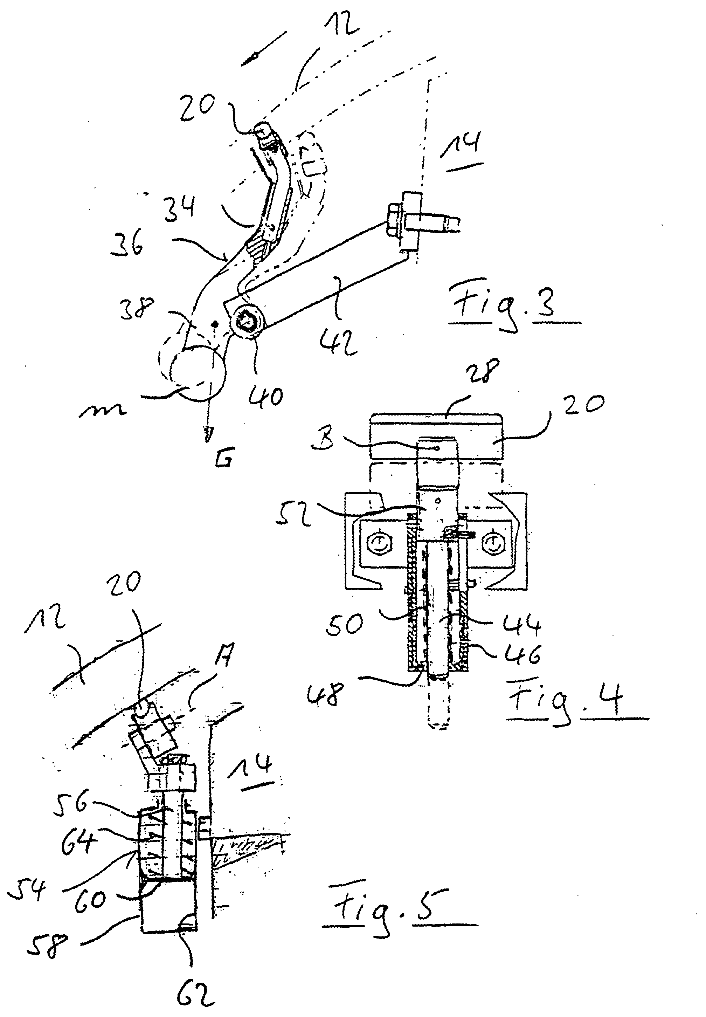

Figur 1 zeigt in schematischer Querschnittsdarstellung eine Durchbiegungsausgleichswalze 10. Diese umfaßt einen umlaufenden Walzenmantel 12, ein den Walzenmantel 12 axial durchsetzendes Joch 14 und mehrere, in Axialrichtung einen jeweiligen Abstand a voneinander aufweisende hydrostatische und/oder hydrodynamische Stützelemente 16 (vgl. auch Figur 2), durch die der Walzenmantel 12 am Joch 14 unter Ausbildung eines dazwischenliegenden Fluidpolsters abgestützt ist.

Beim vorliegenden Ausführungsbeispiel ist der Walzenmantel 12 starr und bezüglich des Jochs 14 parallel zur durch die Stützelemente 16 und die Achse der Durchbiegungsausgleichswalze 10 verlaufenden Preßebene P verschiebbar. Hierbei wirkt die als Oberwalze verwendete Durchbiegungsausgleichswalze 10 mit einer Unterwalze 18 zusammen.

Am Innenumfang des Walzenmantels 12 sind mehrere, über die axiale Länge des Walzenmantels 12 verteilte Fluidabstreifelemente 20 vorgesehen. Diese sind in einer zur Walzenachse parallelen Reihe auf der in Figur 1 linken Seite des Jochs 14 in der oberen Walzenhälfte angeordnet.

Wie am besten anhand von Figur 2 zu erkennen ist, sind einerseits die Abstände a zwischen den Stützelementen 16 und andererseits die Abstände b zwischen den Fluidabstreifelementen 20 jeweils gleich groß, wobei die beiden Werte a und b jedoch verschieden sind. Die axiale Länge l der gegenüber den Stützelementen 16 um eine halbe Teilung T der Stützelementenanordnung versetzten Fluidabstreifelemente 20 ist im vorliegenden Fall etwas größer als der Abstand a zwischen den Stützelementen 16.

Den Fluidabstreifelementen 20 ist wenigstens eine ebenfalls seitlich des Jochs 14 angeordnete Fluidaufnahme 22 für einen schwerkraftunterstützten Fluidaustrag zugeordnet (vgl. Figur 1).

Die kolbenartigen Stützelemente 16 sind mit Hydrostatiktaschen 24 versehen, die über den jeweiligen Druckraum 26 (vgl. Figur 1) gespeist werden, durch den das betreffende Stützelement 16 beaufschlagbar ist.

Bei sich in Figur 1 nach links drehendem Walzenmantel 12 (Drehrichtung R) wird von der Innenfläche des Walzenmantels 12 mitgenommenes Fluid durch die Fluidabstreifelemente 20 in der dargestellten Weise abgestreift und bedingt durch die Schwerkraft in die darunterliegende Fluidaufnahme 22 abgeführt. Diese ist über einen in deren Boden mündenden Kanal 30 mit einem im Joch 14 vorgesehenen zentralen Kanal 32 verbunden, der gemäß Figur 1 tiefer liegt als die Aufnahme 22, so daß das Fluid allein aufgrund des hydrostatischen Drucks bzw. schwerkraftunterstützt abfließen kann. Ein Absaugen ist damit in der Regel nicht erforderlich.

Gemäß Figur 2 ist auch zwischen einem jeweiligen axialen Ende des Walzenmantels 12 und dem benachbarten Stützelement 16 jeweils ein Fluidabstreifelement 20 vorgesehen. Der Figur 2 kann auch entnommen werden, daß die Fluidabstreifelemente 20 gezielt auf die durch die Stützelemente 16 gebildeten Fluidringe 34 wirken. Diese breiten sich im Verlauf einer Walzenumdrehung nur wenig in Axialrichtung aus.

Aus den Stützelementen 16 tritt nur ein relativ dünner Fluidfilm aus, dessen Dicke beispielsweise im Bereich von 50 bis 100 µm liegen kann. In diesem Fall sind die Fluidabstreifelemente 16 derart angeordnet, ausgebildet und/oder beaufschlagt, daß sie einen jeweiligen Fluidfilm von einer Dicke im Bereich von etwa 10 bis 100 µm durchlassen.

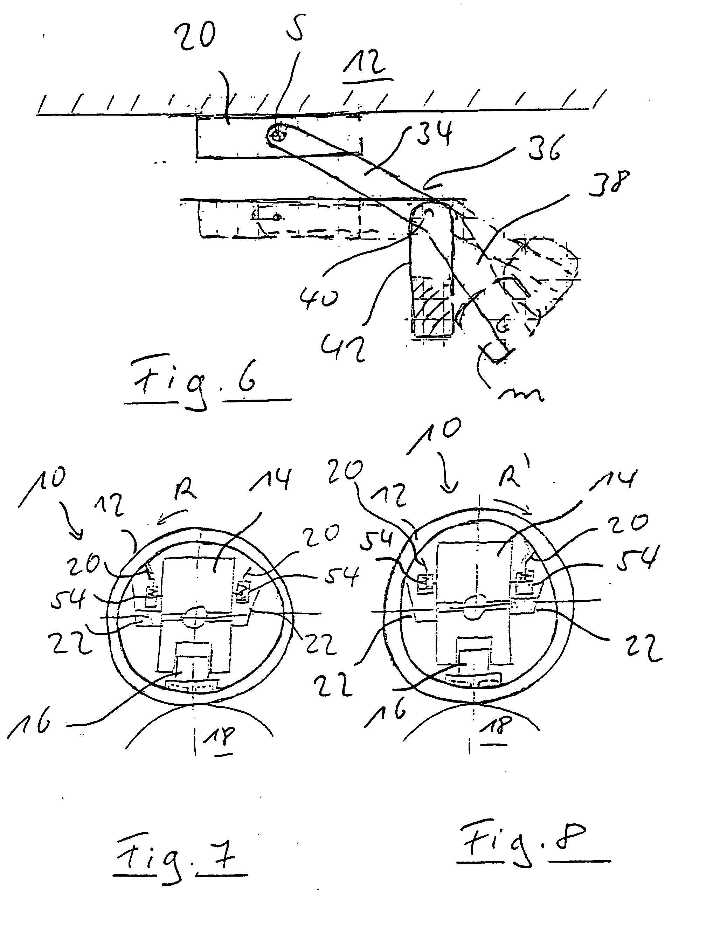

In Figur 3 ist eine Ausführungsvariante eines Fluidabstreifelements 20 gezeigt, das an einem Arm 34 eines zweiarmigen Hebels 36 angeordnet und durch die auf den anderen Hebelarm 38 wirkende Schwerkraft G gegen die Innenfläche des Walzenmantels 12 gehalten ist. Der zweiarmige Hebel 36 ist über ein Gelenk 40 an einem Trägerelement 42 angebracht, das wiederum am Joch 14 befestigt ist. Um eine möglichst optimale schwerkraftunterstützte Anpressung zu erzielen, ist der Hebelarm 38 an seinem Ende mit einer zusätzlichen Masse m versehen.

In Figur 3 sind mit durchgezogenen und gestrichelten Linien zwei unterschiedliche Schwenklagen des Hebels 36 dargestellt, die sich daraus ergeben, daß der Walzenmantel 12 relativ zum Joch 14 verschoben wurde. Bei der in Figur 3 dargestellten Verwendung der Durchbiegungsausgleichswalze 10 als Oberwalze wird das Fluidabstreifelement 20 somit unabhängig von der jeweiligen Lage des Walzenmantels 12 relativ zum Joch 14 stets an die Innenfläche des Walzenmantels 12 gedrückt.

Wird dieselbe Walze dagegen als Unterwalze verwendet, so bewirkt die am Ende des Hebelarms 38 vorgesehen Masse m, daß das Fluidabstreifelement 20 von der Innenfläche des Walzenmantels 12 weggeschwenkt wird und damit wirkungslos bleibt.

Beim in Figur 3 gezeigten Ausführungsbeispiel erstreckt sich die durch das Gelenk 40 definierte Schwenkachse des zweiarmigen Hebels 36 parallel zur Walzenachse.

In Figur 4 ist eine andere Ausführungsvariante eines Fluidabstreifelements 20 gezeigt, das durch Federkraft gegen die Innenfläche des Walzenmantels gepreßt wird. Hierzu ist das klingenartige Fluidabstreifelement 20 vorzugsweise um eine zur Walzenachse senkrechte Achse B schwenkbar an einem Stößel 44 befestigt, der in einer Führungshülse 46 angeordnet ist, deren Boden 48 er mit seinem vom Fluidabstreifelement 20 abgewandten Ende durchdringt. In die Führungshülse 46 ist eine Druckfeder 50 eingesetzt, die auf den Stößel 44 aufgeschoben ist und sich einerseits am Boden 48 der Führungshülse 46 und andererseits an einem verbreiterten Ansatz 52 des Stößels 44 abstützt, an dem das klingenartige Fluidabstreifelement 20 um die Achse B schwenkbar angebracht ist. Durch die Druckfeder 50 wird das Fluidabstreifelement 20 somit gegen die Innenfläche des Walzenmantels gepreßt.

Insbesondere in diesem Fall können die klingenartig ausgebildeten Fluidabstreifelemente 20 gegenüber der Preßebene P leicht zum Innenumfang des Walzenmantels 12 hin so geneigt sein, wie dies in Figur 1 dargestellt ist. Hier beträgt der Neigungswinkel etwa 33°.

Zudem sind die Fluidabstreifelemente 20 jeweils mit einer der Innenfläche des Walzenmantels 12 zugewandten Schrägfläche 28 versehen, durch die sich zwischen dem Innenumfang des Walzenmantels 12 und dem jeweiligen, gegen diesen gehaltenen Fluidabstreifelement 20 ein Keilspalt ergibt (vgl. Fig. 4 und 1). Damit sind die Fluidabstreifelemente 20 nur bei sich in einer Richtung R (vgl. Figur 1) drehendem Walzenmantel 12 wirksam, während sie bei sich in der entgegengesetzten Richtung drehendem Walzenmantel 12 aufgrund des durch den Keilspalt bewirkten hydrodynamischen Effekts Fluid durchlassen.

Im vorliegenden Fall wird die betreffende Durchbiegungsausgleichswalze insbesondere als Oberwalze verwendet, bei der sich der Walzenmantel in der in Figur 1 mit "R" bezeichneten Richtung dreht, so daß die Fluidabstreifelemente 20 wirksam sind. Bei sich in der entgegengesetzten Richtung drehendem Walzenmantel bzw. bei einer Verwendung der Walze als Unterwalze lassen diese Fluidabstreifelemente 20 aufgrund des durch den Keilspalt zwischen der Schrägfläche 28 und dem Walzenmantel bewirkten hydrodynamischen Effekts Fluid durch.

Sind somit die Fluidabstreifelemente 20 beispielsweise in der beschriebenen Weise federnd gegen die Innenfläche des Walzenmantels 12 gehalten, so bleiben sie bei einer Verwendung der in Figur 1 gezeigten Durchbiegungsausgleichswalze 10 als Unterwalze, bei der sich die Drehrichtung des Walzenmantels 12 bezüglich dieser Fluidabstreifelemente 20 umkehrt, wirkungslos. Die in den Figuren 1 und 2 gezeigte Durchbiegungsausgleichswalze 10 kann somit sowohl als Oberwalze als auch als Unterwalze verwendet werden. Im Fall einer Verwendung als Unterwalze dienen dann die Stützelemente 16 selbst als Abstreifelemente.

Auch in Figur 4 sind mit durchgezogenen und gestrichelten Linien wiederum zwei verschiedene Positionen des Fluidabstreifelements 20 dargestellt, die sich aufgrund einer Verschiebung des Walzenmantels relativ zum Joch ergeben.

Statt einer allgemein axial ausgerichteten Reihe solcher Fluidabstreifelemente 20 können insbesondere auch zwei jeweils allgemein axial ausgerichtete Reihen von solchen Abstreifelementen 20 vorgesehen sein, wobei die Fluidabstreifelemente 20 der beiden Reihen mit ihren Schrägflächen 28 dann in unterschiedlicher Weise so angeordnet sind, daß bei sich in der einen Richtung drehendem Walzenmantel nur die Fluidabstreifelemente 20 der einen Reihe und bei sich in der entgegengesetzten Richtung drehendem Walzenmantel nur die Fluidabstreifelemente 20 der anderen Reihe wirksam sind. Eine derartige Anordnung zweier Reihen von Fluidabstreifelementen 20 ist insbesondere in dem Fall von Vorteil, daß die betreffende Durchbiegungsausgleichswalze als Oberwalze für zwei Schwestermaschinen in spiegelverkehrter Anordnung verwendbar sein soll. Die beiden Reihen von Fluidabstreifelementen 20 sind dann auf entgegengesetzten Seiten des Jochs angeordnet.

Figur 5 zeigt eine weitere Ausführungsvariante eines Fluidabstreifelements 20 mit zugeordneter Kolben/Zylinder-Einheit 54, durch die es gegen die Innenfläche des Walzenmantels 12 preßbar ist. Hierbei ist das Fluidabstreifelement 20 um eine zumindest im wesentlichen in Umfangsrichtung verlaufende Achse A schwenkbar am äußeren Ende einer Kolbenstange 56 befestigt, an deren anderem Ende der im Zylinder 58 vorgesehene Kolben 60 befestigt ist. Der Zylinder 58 ist wiederum am Joch 14 fest angebracht. Über den unteren Druckraum 62 des Zylinders 58 ist der Kolben 60 so beaufschlagbar, daß über die Kolbenstange 56 das Fluidabstreifelement 20 gegen die Innenfläche des Walzenmantels 12 gepreßt wird.

Im oberhalb des Kolbens 60 gelegenen Zylinderraum ist eine Druckfeder 64 eingesetzt, die auf die Kolbenstange 56 aufgeschoben ist und sich einerseits am Kolben 60 und andererseits an der oberen, mit einer Durchgangsöffnung für die Kolbenscange 56 versehenen Stirnwand des Zylinders 58 abstürzt.

Durch diese Druckfeder 62 wird das Fluidabstreifelement 20 somit bei fehlender Druckbeaufschlagung in eine Ausgangslage zurückgestellt, in der es einen hinreichenden Abstand von der Innenfläche des Walzenmantels 12 aufweist.

Ein solches Fluidabstreifelement 20 ist somit insbesondere auch extern ansteuerbar. Zudem ist die Kraft, mit der das Fluidabstreifelement 20 gegen die Innenfläche des Walzenmantels 12 gepreßt wird, ggf. auch problemlos einstellbar oder variierbar.

Soll durch die betreffenden Fluidabstreifelemente 20 beispielsweise im Fall einer Verwendung der Durchbiegungsausgleichswalze als Oberwalze Fluid abgestreift werden, so sind die jeweiligen Druckräume 62 mit einem entsprechenden Druckfluid zu beaufschlagen, worauf die Fluidabstreifelemente 20 entgegen der Kraft der Druckfedern 64 an den Walzenmantel 12 angepreßt werden. Sollen die Fluidabstreifelemente 20 dagegen wie beispielsweise bei der Verwendung der Durchbiegungsausgleichswalze als Unterwalze wirkungslos bleiben, so sind die Druckräume 62 lediglich druckfrei zu halten bzw. zu entlasten. Durch die Druckfedern 64 ist dann dafür gesorgt, daß die Fluidabstreifelemente 20 in einem hinreichenden Abstand von der Innenfläche des Walzenmantels 12 gehalten werden.

Gemäß den Figuren 7 und 8 können statt einer auch wiederum zwei jeweils allgemein axial ausgebildete Reihen solcher Fluidabstreifelemente 20 vorgesehen sein. Die beiden Reihen von Fluidabstreifelementen sind auf den beiden einander entgegengesetzten Seiten des Jochs 14 angeordnet. Jeder Reihe von Fluidabstreifelementen 20 ist jeweils wiederum wenigstens eine darunterliegende Fluidaufnahme 22 zugeordnet, um das Fluid schwerkraftunterstützt abzutragen (vgl. auch Figur 1).

Die in den Figuren 7 und 8 dargestellten Durchbiegungsausgleichswalzen 10 dienen jeweils als Oberwalze, die zur Bildung eines jeweiligen Preßspaltes mit einer Unterwalze 18 zusammenwirkt. Bei den in den Figuren 7 und 8 dargestellten Walzenanordnungen handelt es sich um spiegelverkehrte Anordnungen, was bedeutet, daß sich der Walzenmantel 12 in dem einen Fall in der einen Richtung R, in Figur 7 entgegen dem Uhrzeigersinn, und im anderen Fall in der entgegengesetzten Richtung R', d.h. im Uhrzeigersinn dreht (vgl. Figur 8) .

Gemäß Figur 7 wird nur durch die linke Reihe von Fluidabstreifelementen 20 Fluid von der Innenfläche des Walzenmantels 12 abgestreift. Hierzu sind die zugeordneten Zylinder/Kolben-Einheiten 54 entsprechend beaufschlagt, so daß die Fluidabstreifelemente 20 entgegen der Kraft der Rückstellfedern gegen den Walzenmantel 12 gepreßt werden. Dagegen bleiben bei dieser in Figur 7 gezeigten Anordnung die Fluidabstreifelemente 20 der rechten Reihe wirkungslos. Die betreffenden Zylinder/Kolben-Einheiten 54 sind demnach nicht beaufschlagt, so daß die Fluidabstreifelemente 20 durch die Kraft der Rückstellfedern in der Ausgangslage gehalten werden, in der sie einen hinreichenden Abstand von der Innenfläche des Walzenmantels 12 aufweisen.

Bei der Anordnung gemäß Figur 8 hat sich die Drehrichtung des Walzenmantels 12 geändert. Dieser dreht sich nun in der entgegengesetzten Richtung R', in diesem Fall im Uhrzeigersinn. Entsprechend werden nun die Zylinder/Kolben-Einheiten 54 der rechcen Reihe von Fluidabstreifelementen 20 mit Druck beaufschlagt, so daß durch die rechten Fluidabstreifelemente 20 Fluid von der Innenfläche des Walzenmantels 12 abgestreift wird.

Demgegenüber bleiben bei dieser in Figur 8 gezeigten Walzenanordnung die linken Fluidabstreifelemente 20 der wiederum als Oberwalze verwendeten Durchbiegungsausgleichswalze 10 wirkungslos. Die betreffenden Zylinder/Kolben-Einheiten 54 sind drucklos, so daß die Fluidabstreifelemente 20 durch die Druckfedern in der Ausgangslage gehalten werden, in der sie im Abstand von der Innenfläche des Walzenmantels 12 angeordnet sind.

Demnach kann ein und dieselbe Durchbiegungsausgleichswalze 10 sowohl für die Anordnung gemäß Figur 7 als auch für die Anordnung gemäß Figur 8 verwendet werden. Hierzu ist lediglich eine andere Ansteuerung der Fluidabstreifelemente 20 erforderlich.

Auch in diesem Fall ist die jeweilige Anpreßkraft wiederum von außen beeinflußbar.

In Figur 6 ist eine weitere Ausführungsform eines Fluidabstreifelements 20 gezeigt, das an einem Arm 34 eines zweiarmigen Hebels 36 angeordnet und durch die auf den anderen Hebelarm 38 wirkende Schwerkraft gegen die Innenfläche des Walzenmantels 12 gedrückt wird.

Der zweiarmige Hebel 36 ist wiederum über ein Gelenk 40 an einem am Joch befestigten Trägerelement 42 angebracht. Im Unterschied zum Ausführungsbeispiel gemäß Figur 3 erstreckt sich die durch das Gelenk 40 definierte Schwenkachse nunmehr jedoch nicht mehr parallel, sondern senkrecht zur Walzenachse, d.h. in Figur 6 senkrecht zur Zeichnungsebene.

Zudem ist das Fluidabstreifelement 20 klingenartig ausgebildet und ebenfalls schwenkbar am Hebelarm 34 angebracht. Die betreffende Schwenkachse S erstreckt sich ebenfalls senkrecht zur Walzenachse und im wesentlichen in Umfangsrichtung.

Das freie Ende des Hebelarms 38 ist wiederum mit einer Masse m versehen, um eine möglichst optimale schwerkraftunterstützte Anpressung zu erhalten.

Auch in Figur 6 ist der einmal mit durchgehenden und einmal mit gestrichelten Linien dargestellte Hebel 36 in zwei verschiedenen Schwenklagen dargestellt, die sich aufgrund unterschiedlicher Positionen des Walzenmantels 12 relativ zum Joch ergeben. In beiden Schwenklagen des Hebels 36 liegt das Fluidabstreifelement 20 vollständig an der Innenfläche des Walzenmantels 12 an, was durch die um die Achse S schwenkbare Lagerung des Fluidabstreifelements 20 am Hebelarm 34 möglich ist.

Wird die betreffende Durchbiegungsausgleichswalze als Oberwalze verwendet, so bewirkt die Masse m, daß das Fluidabstreifelement 20 durch ein entsprechendes Verschwenken des Hebels 36 gegen die Innenfläche des Walzenmantels 12 gepreßt wird. Dagegen wird der Hebel 36 bei einer Verwendung der Walze als Unterwalze infolge der Masse m so verschwenkt, daß das Fluidabstreifelement 20 in hinreichendem Abstand von der Innenfläche des Walzenmantels 12 gehalten wird. Hierbei kann der maximale Hub des Fluidabstreifelements 20 beispielsweise etwa 40 mm betragen.

### Bezugzeichenliste

- 10: Durchbiegungsausgleichswalze
- 12: Walzenmantel
- 14: Joch
- 16: Stützelemente
- 18: Unterwalze
- 20: Fluidabstreifelemente
- 22: Fluidaufnahme
- 24: Hydrostatiktaschen
- 26: Druckraum
- 28: Schrägfläche
- 30: Kanal
- 32: Kanal
- 34: Hebelarm
- 36: Hebel
- 38: Hebelarm
- 40: Gelenk
- 42: Trägerelement
- 44: Stößel
- 46: Führungshülse
- 48: Boden
- 50: Druckfeder
- 52: Ansatz
- 54: Zylinder/Kolben-Einheit
- 56: Kolbenstange
- 58: Zylinder
- 60: Kolben
- 62: Druckraum
- 64: Druckfeder

- a: Abstand
- b: Abstand
- l: axiale Länge
- m: Masse
- A: Achse
- B: Achse
- G: Schwerkraft
- P: Preßebene
- R: Richtung
- R': Richtung
- T: Teilung

## Patentansprüche

1. Durchbiegungsausgleichswalze (10) mit einem umlaufenden Walzenmantel (12), einem den Walzenmantel (12) axial durchsetzenden Joch (14) und mehreren, in Axialrichtung einen jeweiligen Abstand (a) voneinander aufweisenden hydrostatischen und/oder hydrodynamischen Stützelementen (16), durch die der Walzenmantel (12) am Joch (14) unter Ausbildung eines dazwischenliegenden Fluidpolsters abgestützt ist,
**dadurch gekennzeichnet,**
**daß** am Innenumfang des Walzenmantels (12) mehrere über dessen axiale Länge verteilte Fluidabstreifelemente (20) vorgesehen sind, die bezüglich der Stützelemente (16) auf Lücke angeordnet sind.

2. Durchbiegungsausgleichswalze nach Anspruch 1,
**dadurch gekennzeichnet,**
**daß** auch zwischen einem jeweiligen axialen Ende des Walzenmantels (12) und dem benachbarten Stützelement (16) jeweils ein Fluidabstreifelement (20) vorgesehen ist.

3. Durchbiegungsausgleichswalze nach Anspruch 1 oder 2,
**dadurch gekennzeichnet,**
**daß** bei einerseits gleich großen axialen Abständen (a) zwischen den Stützelementen (16) andererseits die axialen Abstände (b) zwischen den Fluidabstreifelementen (20) gleich groß sind.

4. Durchbiegungsausgleichswalze nach einem der vorhergehenden Ansprüchen,
**dadurch gekennzeichnet,**
**daß** die axiale Länge (l) der Fluidabstreifelemente (20) zumindest gleich dem Abstand (a) zwischen den Stützelementen (16) ist.

5. Durchbiegungsausgleichswalze nach einem der vorhergehenden Ansprüche,
**dadurch gekennzeichnet,**
**daß** die axiale Länge (l) der gegenüber den Stützelementen (16) um eine halbe Teilung (T) der Stützelementenanordnung versetzten Fluidabstreifelemente (20) zumindest gleich dem Abstand zwischen den Stützelementen (16), vorzugsweise größer als dieser Abstand (a) ist und insbesondere etwa ein Drittel der Teilung (T) der Stützelementenanordnung beträgt.

6. Durchbiegungsausgleichswalze nach einem der vorhergehenden Ansprüche,
**dadurch gekennzeichnet,**
**daß** die Fluidabstreifelemente (20) zumindest teilweise derart angeordnet, ausgebildet und/oder beaufschlagbar sind, daß sie einen jeweiligen Fluidfilm von einer Dicke im Bereich von etwa 10 bis 100 µm durchlassen.

7. Durchbiegungsausgleichswalze nach einem der vorhergehenden Ansprüche,
**dadurch gekennzeichnet,**
**daß** die Fluidabstreifelemente (20) zumindest teilweise derart angeordnet, ausgebildet und/oder beaufschlagbar sind, daß sie nur bei einer Verwendung der Durchbiegungsausgleichswalze (10) als Oberwalze wirksam sind, bei der sie in der oberen Walzenhälfte liegen, während sie bei einer Verwendung der Durchbiegungsausgleichswalze (10) als Unterwalze, bei der sie in der unteren Walzenhälfte liegen, unwirksam bleiben.

8. Durchbiegungsausgleichswalze nach einem der vorhergehenden Ansprüche,
**dadurch gekennzeichnet,**
**daß** die Fluidabstreifelemente (20) zumindest teilweise derart angeordnet, ausgebildet und/oder beaufschlagbar sind, daß sie nur bei sich in einer Richtung drehendem Walzenmantel (12) wirksam sind, während sie bei sich in der entgegengesetzten Richtung drehendem Walzenmantel (12) unwirksam bleiben.

9. Durchbiegungsausgleichswalze nach einem der vorhergehenden Ansprüche,
**dadurch gekennzeichnet,**
**daß** zwei jeweils allgemein axial ausgerichtete Reihen von Fluidabstreifelementen (20) vorgesehen und die Fluidabstreifelemente (20) derart angeordnet, ausgebildet und/oder beaufschlagbar sind, daß die der einen Reihe zugeordneten Fluidabstreifelemente (20) nur bei sich in einer Richtung drehendem Walzenmantel (12) und die der anderen Reihe zugeordneten Fluidabstreifelemente (20) nur bei sich in der entgegengesetzten Richtung drehendem Walzenmantel (12) wirksam sind.

10. Durchbiegungsausgleichswalze nach einem der Ansprüche 1 bis 8,
**dadurch gekennzeichnet,**
**daß** die Fluidabstreifelemente (20) zumindest teilweise derart angeordnet, ausgebildet und/oder beaufschlagbar sind, daß sie sowohl bei sich in der einen als auch bei sich in der entgegengesetzten Richtung drehendem Walzenmantel (12) wirksam sind.

11. Durchbiegungsausgleichswalze nach einem der vorhergehenden Ansprüche,
**dadurch gekennzeichnet,**
**daß** den Fluidabstreifelementen (20) wenigstens eine Fluidaufnahme (22) für einen schwerkraftunterstützten Fluidaustrag zugeordnet ist.

12. Durchbiegungsausgleichswalze nach einem der vorhergehenden Ansprüche,
**dadurch gekennzeichnet,**
**daß** wenigstens eines der Fluidabstreifelemente (20) an einem Arm (34) eines zweiarmigen Hebels (36) angeordnet und durch die auf den anderen Hebelarm (38) wirkende Schwerkraft (G) je nach Verwendung bzw. Einbaulage der Durchbiegungsausgleichswalze (10) gegen den Innenumfang des Walzenmantels (12) gedrückt oder im Abstand von diesem gehalten ist.

13. Durchbiegungsausgleichswalze nach einem der vorhergehenden Ansprüche,
**dadurch gekennzeichnet,**
**daß** wenigstens eines der Fluidabstreifelemente (20) durch Federkraft (50) gegen den Innenumfang des Walzenmantels (12) gepreßt ist.

14. Durchbiegungsausgleichswalze nach einem der vorhergehenden Ansprüche,
**dadurch gekennzeichnet,**
**daß** wenigstens eines der Fluidabstreifelemente (20) so ausgebildet ist, daß sich zwischen dem Innenumfang des Walzenmantels (12) und dem gegen diesen gehaltenen Fluidabstreifelement (20) ein Keilspalt ergibt, so daß das Fluidabstreifelement (20) nur bei sich in einer Richtung drehendem Walzenmantel (12) wirksam ist, während es bei sich in der entgegengesetzten Richtung drehendem Walzenmantel (12) aufgrund des durch den Keilspalt bewirkten hydrodynamischen Effekts Fluid durchläßt.

15. Durchbiegungsausgleichswalze nach einem der vorhergehenden Ansprüche,
**dadurch gekennzeichnet,**
**daß** wenigstens eines der Fluidabstreifelemente (20) eine Kolben/Zylinder-Einheit (54) umfaßt, durch die es gegen den Innenumfang des Walzenmantels (12) preßbar ist, während es vorzugsweise durch Federkraft (64) in eine Ausgangslage rückstellbar ist, in der es einen Abstand vom Innenumfang des Walzenmantels (12) aufweist.

## Claims

1. Controlled deflection roll (10) having a revolving roll shell (12), a yoke (14) that passes axially through the roll shell (12) and a plurality of hydrostatic and/or hydrodynamic supporting elements (16) which are at a respective distance (a) from one another in the axial direction and by which the roll shell (12) is supported on the yoke (14), forming a fluid cushion located in between, **characterized in that**, on the inner circumference of the roll shell (12), a plurality of fluid wiping elements (20) distributed over its axial length are provided and are arranged opposite gaps with respect to the supporting elements (16).

2. Controlled deflection roll according to Claim 1, **characterized in that** in each case a fluid wiping element (20) is also provided between a respective axial end of the roll shell (12) and the adjacent supporting element (16).

3. Controlled deflection roll according to Claim 1 or 2, **characterized in that**, if the axial spacings (a) between the supporting elements (16) are equally large on one side, the axial spacings (b) between the fluid wiping elements (20) are equally large on the other side.

4. Controlled deflection roll according to one of the preceding claims, **characterized in that** the axial length (l) of the fluid wiping elements (20) is at least equal to the spacing (a) between the supporting elements (16).

5. Controlled deflection roll according to one of the preceding claims, **characterized in that** the axial length (l) of the fluid wiping elements (20) offset with respect to the supporting elements (16) by half the pitch (T) of the supporting element arrangement is at least equal to the spacing between the supporting elements (16), preferably greater than this spacing (a) and, in particular, is about one-third of the pitch (T) of the supporting element arrangement.

6. Controlled deflection roll according to one of the preceding claims, **characterized in that** the fluid wiping elements (20) are at least to some extent arranged and formed and/or can be loaded in such a way that they let through a respective fluid film with a thickness in the range from about 10 to 100 µm.

7. Controlled deflection roll according to one of the preceding claims, **characterized in that** the fluid wiping elements (20) are at least to some extent arranged and formed and/or can be loaded in such a way that they are effective only when the controlled deflection roll (10) is used as a top roll, in which they are located in the upper half of the roll, whereas they remain ineffective when the controlled deflection roll (10) is used as a bottom roll, in which they are located in the lower half of the roll.

8. Controlled deflection roll according to one of the preceding claims, **characterized in that** the fluid wiping elements (20) are at least to some extent arranged and formed and/or can be loaded in such a way that they are effective only when the roll shell (12) rotates in one direction, whereas they remain ineffective when the roll shell (12) rotates in the opposite direction.

9. Controlled deflection roll according to one of the preceding claims, **characterized in that** in each case two generally axially aligned rows of fluid working elements (20) are provided and the fluid wiping elements (20) are arranged and formed and/or can be loaded in such a way that the fluid wiping elements (20) assigned to one row are effective only when the roll shell (12) rotates in one direction, and the fluid wiping elements (20) assigned to the other row are effective only when the roll shell (12) rotates in the opposite direction.

10. Controlled deflection roll according to one of Claims 1 to 8, **characterized in that** the fluid wiping elements (20) are at least to some extent arranged and formed and/or can be loaded in such a way that they are effective both when the roll shell (12) rotates in one direction and when it rotates in the opposite direction.

11. Controlled deflection roll according to one of the preceding claims, **characterized in that** the fluid wiping elements (20) are assigned at least one fluid holder (22) for a discharge of fluid assisted by the force of gravity.

12. Controlled deflection roll according to one of the preceding claims, **characterized in that** at least one of the fluid wiping elements (20) is arranged on an arm (34) of a two-armed lever (36) and is pressed against the inner circumference of the roll shell (12) or kept at a distance from the latter by means of the force of gravity (G) acting on the other lever arm (38), depending on the use and installed position of the controlled deflection roll (10).

13. Controlled deflection roll according to one of the preceding claims, **characterized in that** at least one of the fluid wiping elements (20) is pressed against the inner circumference of the roll shell (12) by spring force (50).

14. Control deflection roll according to one of the preceding claims, **characterized in that** at least one of the fluid wiping elements (20) is formed in such a way that a wedge-shaped gap results between the inner circumference of the roll shell (12) and the fluid wiping elements (20) held against the latter, so that the fluid wiping element (20) is effective only when the roll shell (12) rotates in one direction, whereas it lets through fluid on account of the hydrodynamic effects effected by the wedge-shaped gap when the roll shell (12) rotates in the opposite direction.

15. Controlled deflection roll according to one of the preceding claims, **characterized in that** at least one of the fluid wiping elements (20) comprises a piston-cylinder unit (54), by means of which it can be pressed against the inner circumference of the roll shell (12), while it can be returned, preferably by spring force (64), into an initial position, in which it is at a distance from the inner circumference of the roll shell (12).

## Revendications

1. Rouleau de compensation de flexion (10) avec une enveloppe de rouleau circonférentielle (12), un joug (14) passant axialement par l'enveloppe de rouleau (12) et plusieurs éléments supports hydrostatiques et/ou hydrodynamiques (16) présentant un écart (a) les uns des autres dans le sens axial et supportant l'enveloppe de rouleau (12) sur le joug (14) en formant un coussin de fluide interposé,
**caractérisé en ce que**
à la circonférence intérieure de l'enveloppe de rouleau (12) plusieurs éléments racleurs de fluide (20) répartis sur la longueur axiale de cette dernière sont prévus sur l'interstice par rapport aux éléments supports (16).

2. Rouleau de compensation de flexion selon la revendication 1,
**caractérisé en ce que**
entre chaque extrémité axiale de l'enveloppe de rouleau (12) et l'élément support (16) voisin, on prévoit également un élément racleur de fluide (20).

3. Rouleau de compensation de flexion selon la revendication 1 ou 2,
**caractérisé en ce que**
lorsque d'un côté les écarts axiaux (a) entre les éléments supports (16) sont égaux, d'un autre côté, les écarts axiaux (b) entre les éléments racleurs de fluide (20) sont égaux.

4. Rouleau de compensation de flexion selon l'une des revendications précédentes,
**caractérisé en ce que**
la longueur axiale (l) des éléments racleurs de fluide (20) est au moins égale à l'écart (a) entre les éléments supports (16).

5. Rouleau de compensation de flexion selon l'une des revendications précédentes,
**caractérisé en ce que**
la longueur axiale (1) des éléments racleurs de fluide (20) décalés par rapport aux éléments supports (16) d'un pas (T) de la disposition des éléments supports est au moins égale à l'écart entre les éléments supports (16), de préférence supérieur à cet écart (a) et correspond en particulier à environ un tiers du pas (T) de la disposition des éléments supports (16).

6. Rouleau de compensation de flexion selon l'une des revendications précédentes,
**caractérisé en ce que**
les éléments racleurs de fluide (20) sont au moins en partie disposés, formés et/ou chargeables de sorte qu'ils laissent passer un film de fluide d'une épaisseur de la plage d'environ 10 à 100 µm.

7. Rouleau de compensation de flexion selon l'une des revendications précédentes,
**caractérisé en ce que**
les éléments racleurs de fluide (20) sont au moins en partie disposés, formés et/ou chargeables de sorte qu'ils ne soient efficaces qu'en cas d'utilisation du rouleau de compensation de flexion (10) en tant que rouleau supérieur, auquel cas ils se situent dans la moitié supérieure du rouleau, alors qu'ils restent sans effet en cas d'utilisation du rouleau de compensation de flexion (10) en tant que rouleau inférieur, auquel cas ils se situent dans la moitié inférieure du rouleau.

8. Rouleau de compensation de flexion selon l'une des revendications précédentes,
**caractérisé en ce que**
les éléments racleurs de fluide (20) sont au moins en partie disposés, formés et/ou chargeables de sorte qu'ils ne soient efficaces que lorsque l'enveloppe de rouleau (12) tourne dans un sens, alors qu'en rotation dans le sens inverse de l'enveloppe de rouleau (12), ils restent sans effet.

9. Rouleau de compensation de flexion selon l'une des revendications précédentes,
**caractérisé en ce que**
deux rangées d'éléments racleurs de fluide (20) généralement alignées dans le sens axial sont prévues et que les éléments racleurs de fluide (20) sont disposés, formés et/ou chargeables de sorte que les éléments racleurs de fluide (20) attribués à l'une des rangées ne soient efficaces que lorsque l'enveloppe de rouleau (12) tourne dans un sens et les éléments racleurs de fluide (20) attribués à l'autre rangée ne soient efficaces qu'en rotation dans le sens inverse de l'enveloppe de rouleau (12).

10. Rouleau de compensation de flexion selon l'une des revendications 1 à 8,
**caractérisé en ce que**
les éléments racleurs de fluide (20) sont au moins en partie disposés, formés et/ou chargeables de sorte qu'ils soient efficaces aussi bien dans un sens de rotation de l'enveloppe de rouleau (12) que dans le sens inverse.

11. Rouleau de compensation de flexion selon l'une des revendications précédentes,
**caractérisé en ce que**
au moins un collecteur de fluide (22) est attribué aux éléments racleurs de fluide (20) pour une évacuation par gravitation du fluide.

12. Rouleau de compensation de flexion selon l'une des revendications précédentes,
**caractérisé en ce que**
au moins un des éléments racleurs de fluide (20) est disposé sur un bras (34) d'un levier double bras (36) et qu'en fonction de l'utilisation ou de la position d'installation du rouleau de compensation de flexion (10), la force de gravitation (G) agissant sur l'autre bras de levier (38) appuie cet élément contre la circonférence intérieure de l'enveloppe de rouleau (12) ou le maintient écarté de celle-ci.

13. Rouleau de compensation de flexion selon l'une des revendications précédentes,
**caractérisé en ce que**
au moins un des éléments racleurs de fluide (20) est pressé contre la circonférence intérieure de l'enveloppe de rouleau (12) par une force de ressort (50).

14. Rouleau de compensation de flexion selon l'une des revendications précédentes,
**caractérisé en ce que**
au moins un des éléments racleurs de fluide (20) est formé de sorte qu'une fente cunéiforme résulte entre la circonférence intérieure de l'enveloppe de rouleau (12) et l'élément racleur de fluide pressé contre cette dernière si bien que l'élément racleur de fluide (20) n'est efficace que lorsque l'enveloppe de rouleau (12) tourne dans un sens et qu'il reste sans effet lorsqu'il laisse passer du fluide en raison de l'effet hydrodynamique créé par la fente cunéiforme lorsque l'enveloppe de rouleau (12) tourne dans le sens inverse.

15. Rouleau de compensation de flexion selon l'une des revendications précédentes,
**caractérisé en ce**
**qu'**au moins un des éléments racleurs de fluide (20) comprend une unité piston/cylindre (54) par laquelle il peut être pressé contre la circonférence intérieure d'une enveloppe de rouleau (12) tout en étant, grâce à une force de ressort (64), de préférence positionnable en arrière dans une position initiale dans laquelle il présente un écart par rapport à la circonférence intérieure de l'enveloppe de rouleau (12).
